(19) Europäisches Patentamt
European Patent Office
Office européen des brevets

(11) **EP 3 682 199 B1**

(12) **FASCICULE DE BREVET EUROPEEN**

(45) Date de publication et mention de la délivrance du brevet:
**12.02.2025 Bulletin 2025/07**

(21) Numéro de dépôt: **18806975.1**

(22) Date de dépôt: **14.09.2018**

(51) Classification Internationale des Brevets (IPC):
**G01J 1/04** *(2006.01)* **G01J 1/42** *(2006.01)*

(52) Classification Coopérative des Brevets (CPC):
**G01J 1/42; G01J 1/0411; H04N 23/951;**
G01J 2001/4266

(86) Numéro de dépôt international:
**PCT/EP2018/074973**

(87) Numéro de publication internationale:
**WO 2019/053232 (21.03.2019 Gazette 2019/12)**

(54) **SYSTEME DE MESURE DES COMPOSANTES DU RAYONNEMENT SOLAIRE**

SYSTEM ZUR MESSUNG DER BESTANDTEILE VON SONNENSTRAHLUNG

SYSTEM FOR MEASURING COMPONENTS OF SOLAR RADIATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2017 FR 1758549**

(43) Date de publication de la demande:
**22.07.2020 Bulletin 2020/30**

(73) Titulaires:
• **Centre national de la recherche scientifique**
**75016 Paris (FR)**
• **Université de Perpignan Via Domitia**
**66100 Perpignan (FR)**

(72) Inventeurs:
• **GRIEU, Stéphane**
**66600 Rivesaltes (FR)**
• **CHAUVIN, Remi**
**38410 Saint Martin D'uriage (FR)**

• **THIL, Stéphane**
**66450 Pollestres (FR)**
• **NOU, Julien**
**66620 Brouilla (FR)**

(74) Mandataire: **Ipside**
**4, rue de Kerogan**
**29337 Quimper Cedex (FR)**

(56) Documents cités:
• **REMI CHAUVIN: "Evaluation de la ressource solaire pour la gestion optimisée de centrales CSP", 22 April 2016 (2016-04-22), XP055478458, Retrieved from the Internet <URL:http://www. theses.fr/2016PERP0009> [retrieved on 20180525]**
• **KURTZ BENJAMIN ET AL: "Measuring diffuse, direct, and global irradiance using a sky imager", SOLAR ENERGY, PERGAMON PRESS. OXFORD, GB, vol. 141, 3 December 2016 (2016-12-03), pages 311 - 322, XP029862733, ISSN: 0038-092X, DOI: 10.1016/J.SOLENER.2016.11.032**

**Description**

La présente invention concerne le domaine du rayonnement solaire et des propriétés de l'atmosphère.

L'invention concerne plus particulièrement un système de mesure du rayonnement solaire.

Pour certaines applications, il est nécessaire de connaître les différentes composantes du rayonnement solaire. En particulier, on souhaite connaître les composantes suivantes :

- La composante directe du rayonnement solaire.

Lorsque le rayonnement solaire qui n'interagit pas avec l'atmosphère terrestre lors de sa traversée est mesuré sous incidence normale, on parle d'éclairement normal direct ou DNI (« Direct Normal Irradiance »). Le DNI est exprimé en $W.m^{-2}$.

Pour mesurer le DNI, on utilise généralement un pyrhéliomètre, qui se présente sous la forme d'un tube dont les dimensions définissent l'angle d'ouverture et au fond duquel est placée une thermopile. Le pyrhéliomètre doit être aligné avec l'axe du Soleil, c'est pourquoi un suiveur solaire est nécessaire si l'on souhaite automatiser l'acquisition du DNI. Le coût d'un pyrhéliomètre est d'environ 2,5 k€, celui d'un suiveur solaire étant proche de 10 kE. De plus, pour fonctionner de façon optimale, cet instrument doit être entretenu quotidiennement. Face à ces contraintes de coût et de maintenance, des instruments moins onéreux et plus robustes ont été développés. Parmi eux, l'instrument le plus utilisé est le pyranomètre à bande rotative (voir ci-dessous). Le pyranomètre présente toutefois le désavantage de nécessiter une calibration spectrale précise de la photodiode. Cette calibration est complexe, produisant une incertitude sur le DNI plus élevée que pour un pyrhéliomètre.

- La composante diffuse du rayonnement solaire.

L orsque le rayonnement solaire ayant interagi avec l'atmosphère terrestre lors de sa traversée est mesuré sur une surface horizontale, on parle d'éclairement diffus horizontal ou DHI (« Diffuse Horizontal Irradiance »). Le DHI est exprimé en $W.m^{-2}$.

L e plus souvent, pour mesurer le DHI, on utilise conjointement un pyranomètre et un suiveur solaire équipé d'un élément qui masque le Soleil (permettant ainsi la suppression de la composante directe du rayonnement solaire). Par exemple, une bande rotative vient occulter la photodiode périodiquement afin de mesurer le DHI.

- Le rayonnement solaire global, défini comme la somme des rayonnements direct et indirect reçus au sol. Si ce rayonnement est mesuré horizontalement, on parle d'éclairement global horizontal ou GHI (« Global Horizontal Irradiance »).

Le GHI est exprimé en $W.m^{-2}$.

Pour mesurer le GHI, on utilise généralement un pyranomètre, qui comprend une photodiode montée horizontalement.

À partir des mesures du GHI et du DHI et de la connaissance de la position du Soleil, le DNI peut être déterminé.

En effet, le GHI, le DNI et le DHI sont liés par la relation suivante :

$$GHI = \cos(SZA) \cdot DNI + DHI$$

où SZA est l'angle entre le Soleil et le zénith.

Dans certains cas, on cherche en outre à connaître la durée d'ensoleillement.

La durée d'ensoleillement d'une zone géographique est la durée pendant laquelle cette zone géographique est éclairée par le Soleil.

L'Organisation Météorologique Mondiale (OMM) définit la durée d'ensoleillement comme la durée pendant laquelle le rayonnement solaire direct dépasse le seuil de 120 $W.m^{-2}$.

Dans certains cas, on cherche en outre à connaître le trouble atmosphérique.

Le trouble atmosphérique est relatif aux atténuations du rayonnement solaire lors de sa traversée de l'atmosphère terrestre. Cette atténuation est principalement due aux phénomènes de diffusion par les aérosols et d'absorption par les différents composants atmosphériques (ozone, vapeur d'eau, oxygène...).

Le trouble atmosphérique donne une indication fiable de la qualité de la ressource solaire ou de l'atmosphère pour un site donné.

Par exemple, une estimation du Trouble Atmosphérique (TA) est effectuée en utilisant la relation :

$$TA = 11,1 \frac{\ln\left(b\frac{I_0}{I_{cc}}\right)}{m} + 1 \quad \text{avec} \quad b = 0,664 + 0,163 \cdot \exp\left(\frac{-h}{8000}\right)$$

où h est l'altitude du site considéré, $I_0$ est l'éclairement solaire extraterrestre (W.m$^{-2}$), $I_{cc}$ est le DNI par ciel clair (W.m$^{-2}$) et m est la masse d'air optique relative.

Dans certains cas, on cherche en outre à connaître le profil solaire, c'est-à-dire la distribution de la luminance L dans la zone circumsolaire, c'est-à-dire la zone comprise entre l'extérieur du disque solaire (environ 0,26°) et le demi-angle d'ouverture classique des instruments de mesure du DNI. En pratique, la zone circumsolaire est donc définie par la condition 0,26° < SPA < β, où SPA est l'angle entre le pixel et le Soleil et β est compris entre 1° et 5°.

La luminance énergétique, notée L et exprimée en W.m$^{-2}$.sr$^{-1}$, est le flux rayonné par unité d'angle solide et de surface. La luminance énergétique L est liée à l'éclairement I par la relation :

$$I = \int_{\varphi=0}^{2\pi} \int_{\theta=0}^{\pi/2} L(\theta, \varphi) \cos\theta \cdot d\Omega$$

où $d\Omega$ est l'angle solide élémentaire, $\theta$ et $\varphi$ définissant la direction de propagation de la lumière.

Pour un rayonnement isotrope, on a $I = \pi \cdot L$.

L'instrument le plus précis pour effectuer cette mesure est l'instrument SAM (« Sun Aureole Measurement »). Cet instrument présente l'inconvénient d'un coût très élevé (environ 80 k€).

Chacun des instruments mentionnés ci-avant a un coût minimum de plusieurs milliers d'euros et nécessite un entretien régulier, tant pour le suiveur solaire que pour les capteurs eux-mêmes. La mesure des différentes composantes du rayonnement solaire est donc un processus coûteux et contraignant.

La présente invention vise à remédier à ces inconvénients.

Le mémoire de thèse "Evaluation de la ressource solaire pour la gestion optimisée de centrales CSP" de Rémi Chauvin, 2016, XP055478458, présente un exemple de l'état de la technique.

L'invention propose un système permettant de mesurer plus aisément et à moindre coût les composantes du rayonnement solaire.

Ce but est atteint grâce au fait que le système comporte une caméra munie d'un objectif hémisphérique et d'un capteur apte à capter la lumière pour générer une image, et un processeur apte à :

- Effectuer une calibration géométrique de la caméra afin d'obtenir la correspondance entre le système de coordonnées des pixels de l'image et le système de coordonnées de la caméra.
- Calculer l'angle solide sous-tendu par chaque pixel de l'image, ce qui permettra de pondérer la valeur de la luminance dans les calculs ultérieurs.
- Effectuer une calibration de la caméra donnant la position du Soleil dans le ciel de façon à obtenir la correspondance entre le système de coordonnées de la caméra et les points cardinaux.
- Calculer l'angle entre chaque pixel et le zénith (PZA), l'angle entre chaque pixel et l'azimut (PAA), l'angle entre le Soleil et le zénith (SZA) et l'angle entre le Soleil et l'azimut (SAA), puis l'angle entre chaque pixel et le Soleil (SPA), en utilisant la relation :

$$\cos(SPA) = \cos(SZA) \cdot \cos(PZA) + \sin(SZA) \cdot \sin(PZA) \cdot \cos(|SAA-PAA|)$$

- Obtenir une image à haute dynamique (HDR) du ciel.
- Calculer l'indice d'éclairement global horizontal ($\sigma_{GHI}$), l'indice d'éclairement normal direct ($\sigma_{DNI}$) et l'indice d'éclairement diffus horizontal ($\sigma_{DHI}$), définis comme la somme des luminances mesurées par les pixels de l'image appartenant à une première région d'intérêt ($\Lambda_1$), à une deuxième région d'intérêt ($\Lambda_2$) et à une troisième région d'intérêt ($\Lambda_3$), respectivement, par les formules ci-après, où $\Omega_p$, $L_p$ et PZA sont l'angle solide sous-tendu par un pixel p, la luminance mesurée par ce pixel et l'angle entre ce pixel et le zénith, respectivement :

$$\sigma_{GHI} = \frac{\sum_{p \in \Lambda_1} L_p \Omega_p \cos(PZA)}{\sum_{p \in \Lambda_1} \Omega_p}$$

$$\sigma_{DNI} = \frac{\sum_{p \in \Lambda_2} L_p \Omega_p}{\sum_{p \in \Lambda_2} \Omega_p}$$

$$\sigma_{DHI} = \frac{\sum_{p \in \Lambda_3} L_p \Omega_p \cos(PZA)}{\sum_{p \in \Lambda_3} \Omega_p}$$

- Convertir l'indice d'éclairement global horizontal ($\sigma_{GHI}$), l'indice d'éclairement normal direct ($\sigma_{DNI}$) et l'indice d'éclairement diffus horizontal ($\sigma_{GDHI}$) en éclairement global horizontal (GHI), éclairement normal direct (DNI) et éclairement diffus horizontal (DHI), respectivement.

Grâce à ces dispositions, on obtient une estimation des différentes composantes du rayonnement solaire (DNI, GHI, DHI) avec une seule caméra, qui remplace avantageusement plusieurs instruments de mesure. Le système selon l'invention est donc moins onéreux en achat et en maintenance et moins complexe.

De plus, le système selon l'invention n'utilise pas de masque qui occulte le Soleil. Il y a donc suppression des coûts de fonctionnement et de maintenance d'un masque et des coûts associés à un système mécanique assurant le suivi de la trajectoire du Soleil. En outre, étant donné que le Soleil reste visible durant les mesures, les algorithmes d'estimation des différentes composantes sont plus performants.

L'image à haute dynamique (HDR) est obtenue par l'acquisition de plusieurs images à basse dynamique prises avec différents temps de pose puis la combinaison de ces images en une image HDR, tout en conservant la linéarité du capteur de la caméra.

La première région d'intérêt ($\Lambda_1$) est l'ensemble des pixels de l'image vérifiant PZA < 90°, la deuxième région d'intérêt ($\Lambda_2$) est l'ensemble des pixels de l'image vérifiant SPA < β, où β est l'angle défini comme la limite entre la zone circumsolaire et le reste du ciel, et la troisième région d'intérêt ($\Lambda_3$) est l'ensemble des pixels de l'image vérifiant {SPA > β} ∩ {PZA < 90°}.

Ainsi, on obtient des valeurs fiables pour les diverses composantes du rayonnement solaire.

Avantageusement, le système de mesure comporte un caisson de protection étanche à l'eau et à la poussière dans lequel est logée la caméra, et qui comporte une fenêtre transparente située devant l'objectif de la caméra.

Ainsi, la caméra est protégée des intempéries (pluie et vent) et des corps étrangers.

Avantageusement, le caisson de protection est équipé d'un régulateur de température apte à réguler la température à l'intérieur du caisson.

Ainsi, le système est apte à fonctionner en environnement hostile, par exemple sur le site d'implantation d'une centrale solaire, où les températures sont parfois très élevées.

Avantageusement, le système comprend au moins un filtre qui est apte à atténuer ou moduler la lumière entrant par l'objectif dans la caméra.

L'invention concerne également un procédé de mesure du rayonnement solaire.

Selon l'invention, ce procédé de mesure du rayonnement solaire utilise une caméra munie d'un objectif hémisphérique et comportant un capteur apte à capter la lumière pour générer une image, et un processeur, la caméra étant orientée selon un axe Z qui pointe depuis le sol vers le zénith, et ce procédé comprend les étapes suivantes :

(a) On calibre géométriquement la caméra afin d'obtenir la correspondance entre le système de coordonnées des pixels de l'image fournie par la caméra et le système de coordonnées de la caméra.

(b) On calcule l'angle solide sous-tendu par chaque pixel de l'image, afin de pondérer la valeur de la luminance dans les calculs ultérieurs.

(c) On calibre une seconde fois la caméra en comparant la position théorique du Soleil avec sa position obtenue sur l'image. De cette manière, la correspondance entre le système de coordonnées de la caméra et les points cardinaux est obtenue.

(d) On calcule l'angle entre chaque pixel et le zénith (PZA), l'angle entre chaque pixel et l'azimut (PAA), l'angle entre le Soleil et le zénith (SZA) et l'angle entre le Soleil et l'azimut (SAA), puis l'angle entre chaque pixel et le Soleil (SPA), grâce à la relation :

$$\cos(SPA) = \cos(SZA) \cdot \cos(PZA) + \sin(SZA) \cdot \sin(PZA) \cdot \cos(|SAA-PAA|)$$

(e) On obtient une image à haute dynamique (HDR) du ciel, ladite image à haute dynamique est obtenue par l'acquisition de plusieurs images à basse dynamique prises avec différents temps de pose puis la combinaison de ces images en une image à haute dynamique, tout en conservant la linéarité du capteur de la caméra.

(f) On calcule l'indice d'éclairement global horizontal ($\sigma_{GHI}$), l'indice d'éclairement normal direct ($\sigma_{DNI}$) et l'indice d'éclairement diffus horizontal ($\sigma_{DHI}$), où $\Omega_p$, $L_p$ et PZA sont l'angle solide sous-tendu par un pixel p, la luminance mesurée par ce pixel et l'angle entre ce pixel et le zénith, respectivement, et où ladite première région d'intérêt ($\Lambda_1$) est l'ensemble des pixels (125) de l'image vérifiant PZA < 90°, ladite deuxième région d'intérêt ($\Lambda_2$) est l'ensemble des pixels (125) de l'image vérifiant SPA < β, β étant l'angle défini comme la limite entre la zone circumsolaire et le reste du ciel, et ladite troisième région d'intérêt ($\Lambda_3$) est l'ensemble des pixels (125) de l'image vérifiant {SPA > β} ∩ {PZA < 90°} :

$$\sigma_{GHI} = \frac{\sum_{p \in \Lambda_1} L_p \Omega_p \cos(PZA)}{\sum_{p \in \Lambda_1} \Omega_p}$$

$$\sigma_{DNI} = \frac{\sum_{p \in \Lambda_2} L_p \Omega_p}{\sum_{p \in \Lambda_2} \Omega_p}$$

$$\sigma_{DHI} = \frac{\sum_{p \in \Lambda_3} L_p \Omega_p \cos(PZA)}{\sum_{p \in \Lambda_3} \Omega_p}$$

(g) On effectue une conversion entre l'indice d'éclairement global horizontal ($\sigma_{GHI}$), l'indice d'éclairement normal direct ($\sigma_{DNI}$) et l'indice d'éclairement diffus horizontal ($\sigma_{DHI}$), et l'éclairement global horizontal (GHI), l'éclairement normal direct (DNI) et l'éclairement diffus horizontal (DHI), respectivement.

Avantageusement, le procédé selon l'invention comprend en outre l'étape suivante :

(h) On calcule le profil solaire en mesurant l'éclairement normal direct (DNI) le long d'une ligne de pixels passant par la centre du Soleil sur l'image, puis on répète cette mesure pour une pluralité d'angles, de manière à obtenir la distribution radiale de la luminance autour du Soleil.

Ainsi, on évite l'utilisation d'équipements supplémentaires coûteux, et on obtient une mesure du profil solaire qui est plus précise car cette mesure prend en compte l'anisotropie de la luminance autour du Soleil.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :

- la figure 1 est une vue schématique d'un système de mesure selon l'invention ;
- la figure 2 est un schéma illustrant la correspondance entre un pixel du capteur de la caméra du système selon l'invention et un angle solide ;
- la figure 3 est un schéma montrant les différents angles utilisés pour définir la position du Soleil et d'un pixel de la caméra du système selon l'invention par rapport à un repère.

Le système selon l'invention comprend une caméra 10, munie d'un objectif 20 hémisphérique (également appelé objectif « fisheye »), c'est-à-dire un objectif à grand angle de champ, avec un champ de vision supérieur à 180°. La caméra 10 comprend un capteur 12 apte à capter la lumière pour générer une image, par exemple un capteur CMOS (« Complementary Metal Oxide Semiconductor ») ou un capteur CCD (« Charge Coupled Device »). Le capteur 12 comporte sur sa surface un certain nombre de pixels (125) sur lesquels aboutit la lumière pour former une image.

Avantageusement, la caméra 10 est située sur une plate-forme horizontale, et est située en un lieu où il n'y a pas d'ombrage (par exemple en hauteur et loin de bâtiments et de végétation). Ainsi, on obtient une image de la totalité ou quasi-totalité du ciel, sans obstacles cachant des parties du ciel.

La caméra 10 est orientée selon un axe Z qui pointe depuis le sol vers le zénith.

Avantageusement, le système de mesure comporte un caisson de protection 40 étanche à l'eau et à la poussière dans lequel est logée la caméra 10.

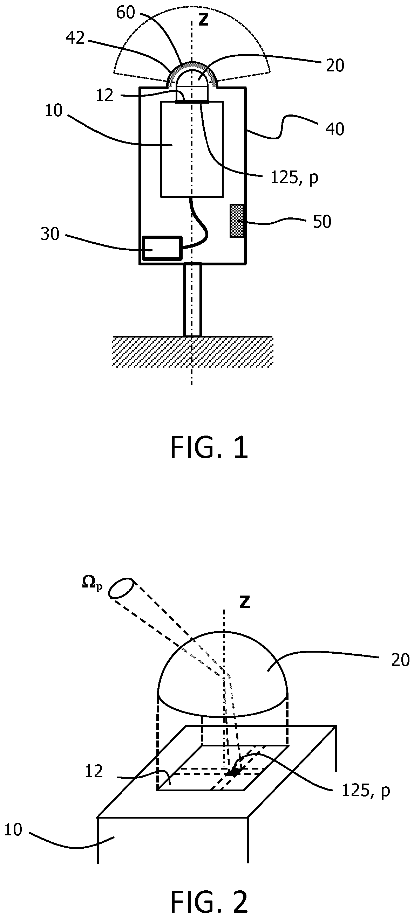

Le caisson 40 comporte une fenêtre transparente 42, par exemple un dôme transparent comme représenté sur la figure 1, qui est située devant l'objectif 20 de la caméra 10 et qui protège cet objectif 20. Ainsi, la fenêtre transparente 42 est située entre l'objectif 20 et le Soleil.

Ainsi, la caméra 10 est protégée de l'eau et de la poussière, tout en laissant les rayons solaires accéder à l'objectif 20.

Avantageusement, le caisson de protection 40 est équipé d'un régulateur de température 50 apte à réguler la température à l'intérieur du caisson 40.

Ainsi, on diminue ou en empêche la condensation à l'intérieur du caisson 40. En conséquence les images prises par la caméra 10 ne sont pas polluées par l'humidité.

Avantageusement, le système comprend un ou plusieurs filtres 60 qui sont aptes à atténuer ou moduler la lumière entrant dans la caméra 10.

Le ou les filtres 60 sont positionnés entre le Soleil et la caméra 10. Ainsi, le ou les filtres 60 sont situés soit entre la caméra 10 et l'objectif 20, soit dans l'objectif 20, soit devant l'objectif 20, soit une combinaison de ces positions.

Par exemple, la face interne de la fenêtre transparente 42 est recouverte d'un filtre 60, comme représenté sur la figure 1 dans le cas où la fenêtre 42 est un dôme.

Avantageusement, la fenêtre transparente 42 est teintée afin d'atténuer les réflexions parasites (qui pourraient, de façon erronée, être prises pour des nuages par les algorithmes développés).

Alternativement, la fenêtre transparente 42 n'est pas teintée. Dans ce cas, le processeur 30 (voir ci-dessous) comprend un algorithme qui supprime ces réflexions parasites.

Le système selon l'invention comprend un processeur 30 relié à la caméra 10.

Ce processeur 30 est apte à effectuer les opérations suivantes :

- Effectuer une première calibration de la caméra 10 afin d'obtenir la correspondance entre le système de coordonnées des pixels 125 de l'image produite par le capteur 12 et le système de coordonnées de la caméra 10. Cette calibration géométrique est effectuée, de façon connue, par exemple à l'aide d'un damier et d'un algorithme.
- Calculer, de façon connue, l'angle solide $\Omega_p$ sous-tendu par chaque pixel (125, p) du capteur 12 de la caméra 10 enregistrant les images, afin de pondérer la valeur de la luminance L dans les calculs ultérieurs. La figure 2 illustre un angle solide $\Omega_p$ et montre la correspondance entre cet angle solide $\Omega_p$ et un pixel (125, p) du capteur 12.
- Effectuer une seconde calibration de la caméra 10 en comparant la position théorique du Soleil avec sa position obtenue sur l'image. De cette manière, la correspondance entre le système de coordonnées de la caméra 10 et les points cardinaux (repère X, Y, Z) est obtenue. La position théorique du Soleil est obtenue de façon connue, par exemple à l'aide d'un algorithme tel que SPA (« Solar Position Algorithm ») ou SG (« Solar Geometry »).
- Calculer l'angle entre chaque pixel (125, p) et le zénith (PZA), l'angle entre chaque pixel et l'azimuth (PAA), l'angle entre le Soleil et le zénith (SZA) et l'angle entre le Soleil et l'azimut (SAA), puis l'angle entre chaque pixel (125, p) et le Soleil (SPA), par la relation :

$$\cos(SPA) = \cos(SZA) \cdot \cos(PZA) + \sin(SZA) \cdot \sin(PZA) \cdot \cos(|SAA-PAA|)$$

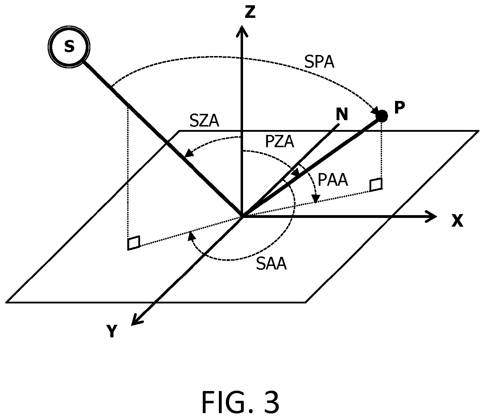

La figure 3 montre la relation entre ces différents angles, le Soleil S, et le zénith Z, ainsi que la direction de référence nord (N, points cardinaux).

Une image à haute dynamique (HDR) est définie comme une image sur laquelle est restituée fidèlement (c'est-à-dire sans sous-exposition ou surexposition) toute la luminance du ciel, de la luminance $L_{min}$ de la zone la plus sombre à la luminance $L_{max}$ de la zone la plus lumineuse (Soleil). La prise en compte de la totalité de la luminance par une caméra implique que le capteur de la caméra ait une plage dynamique $DR_{cam}$ au moins égale à la plage dynamique du ciel $DR_{sky}$ avec :

$$DR_{cam} = 20 \; \log_{10} \left( \frac{L_2}{L_1} \right) \; \text{et} \; DR_{sky} = 20 \; \log_{10} \left( \frac{L_{max}}{L_{min}} \right)$$

où $L_1$ est la luminance minimale mesurable par le capteur de la caméra et $L_2$ est la luminance maximale mesurable par le capteur de la caméra.

Si cette condition n'est pas vérifiée, c'est-à-dire si le capteur 12 de la caméra 10 est apte à prendre uniquement des images à basse dynamique (LDR, pour « Low Dynamic Range »), l'image à haute dynamique est obtenue par l'acquisition de plusieurs images LDR puis la combinaison de ces images en une image HDR, tout en préservant la linéarité du capteur, de façon connue. On décrit ci-dessous un exemple de méthode pour l'obtention d'une image HDR.

Soit plusieurs images HDR prises avec différents temps de pose, le temps total d'acquisition de la séquence d'images LDR doit être suffisamment bref pour garantir que le mouvement des nuages entre chaque image LDR est négligeable, autrement dit que la luminance de la scène est constante au cours de l'acquisition. De plus, il est important de bien paramétrer le nombre souhaité d'images LDR ainsi que les temps de pose minimal $t_{min}$ et maximal $t_{max}$ de telle sorte que la plage dynamique pouvant être théoriquement balayée par l'image HDR vérifie la relation :

$$DR_H = DR_L + 20 \; \log_{10}\left(\frac{t_{max}}{t_{min}}\right) > DR_{sky}$$

où $DR_H$ est la plage dynamique de l'image HDR et $DR_L$ la plage dynamique de l'image LDR. La valeur estimée de chaque pixel de l'image HDR générée est obtenue à partir d'une moyenne pondérée de la valeur des pixels de chaque image LDR (en considérant uniquement les pixels se trouvant dans la plage de linéarité du capteur).

Alternativement, on obtient l'image HDR en utilisant un capteur 12 avec une plage dynamique supérieure à la plage dynamique du ciel $DR_{sky}$.

Selon l'invention, on calcule ensuite l'indice d'éclairement global horizontal ($\sigma_{GHI}$), l'indice d'éclairement normal direct ($\sigma_{DNI}$) et l'indice d'éclairement diffus horizontal ($\sigma_{DHI}$), définis comme la somme des luminances mesurées par les pixels (125) de l'image appartenant à une première région d'intérêt ($\Lambda_1$), à une deuxième région d'intérêt ($\Lambda_2$) et à une troisième région d'intérêt ($\Lambda_3$), respectivement, ces sommes étant pondérées par l'angle solide de la région considérée.

Ainsi, ces indices d'éclairement sont obtenus comme suit :

$$\sigma_{GHI} = \frac{\sum_{p \in \Lambda_1} L_p \Omega_p \cos(PZA)}{\sum_{p \in \Lambda_1} \Omega_p}$$

$$\sigma_{DNI} = \frac{\sum_{p \in \Lambda_2} L_p \Omega_p}{\sum_{p \in \Lambda_2} \Omega_p}$$

$$\sigma_{DHI} = \frac{\sum_{p \in \Lambda_3} L_p \Omega_p \cos(PZA)}{\sum_{p \in \Lambda_3} \Omega_p}$$

où $\Omega_p$ est l'angle solide sous-tendu par un pixel p (voir figure 2), $L_p$ est la luminance mesurée par ce pixel et PZA est l'angle entre ce pixel et le zénith (voir figure 3).

Avantageusement, la première région d'intérêt ($\Lambda_1$) est l'ensemble des pixels (125) de l'image vérifiant PZA < 90°, la deuxième région d'intérêt ($\Lambda_2$) est l'ensemble des pixels (125) de l'image vérifiant SPA < $\beta$, où $\beta$ est l'angle défini comme la limite entre la zone circumsolaire (telle que définie ci-avant) et le reste du ciel, et la troisième région d'intérêt ($\Lambda_3$) est l'ensemble des pixels (125) de l'image vérifiant {SPA > $\beta$ } n {PZA < 90°}.

On obtient ainsi une évaluation plus précise des indices d'éclairement.

Ensuite, l'indice d'éclairement global horizontal ($\sigma_{GHI}$), l'indice d'éclairement normal direct ($\sigma_{DNI}$) et l'indice d'éclairement diffus horizontal ($\sigma_{DHI}$) sont convertis en éclairement global horizontal (GHI), éclairement normal direct (DNI) et éclairement diffus horizontal (DHI), respectivement, par des fonctions de conversion.

Ces fonctions de conversion consistent en des corrélations entre les indices d'éclairement ($\sigma_{GHI}$, $\sigma_{DNI}$ et $\sigma_{DHI}$) et les différentes composantes du rayonnement solaire (GHI, DNI et DHI).

Une régression linéaire simple, voire multiple lorsque plusieurs indices d'éclairement et, éventuellement, leurs historiques sont pris en compte, doit permettre d'approximer chaque fonction de conversion.

Alternativement, il est possible d'approximer ces fonctions grâce aux outils de l'intelligence artificielle, par exemple un réseau de neurones artificiels ou un système neuro-flou (un tel système combine la structure connexionniste d'un réseau de neurones et l'écriture de règles floues ; la logique floue est une extension de la logique booléenne). Une phase d'apprentissage numérique permet, à partir d'une base d'exemples (l'apprentissage est ici supervisé), de déterminer la topologie de l'outil considéré (sa structure) et d'en identifier les paramètres.

L'invention concerne également un procédé de mesure du rayonnement solaire utilisant une caméra 10 munie d'un objectif 20 hémisphérique et comportant un capteur apte à capter la lumière pour générer une image, et un processeur 30, qui comprend les étapes suivantes, déjà décrites ci-avant :

(a) Calibration géométrique afin d'obtenir la correspondance entre le système de coordonnées des pixels de l'image fournie par la caméra et le système de coordonnées de la caméra.

(b) Calcul de l'angle solide sous-tendu par chaque pixel de l'image, afin de pondérer la valeur de la luminance dans les calculs ultérieurs.

(c) Seconde calibration s'appuyant sur la comparaison entre la position théorique du Soleil et sa position obtenue sur l'image, de façon à obtenir la correspondance entre le système de coordonnées de la caméra et les points cardinaux.

(d) Calcul de l'angle entre chaque pixel (125, p) et le zénith (PZA), de l'angle entre chaque pixel et l'azimut (PAA), de l'angle entre le Soleil et le zénith (SZA) et de l'angle entre le Soleil et l'azimut (SAA), puis de l'angle entre chaque pixel (125, p) et le Soleil (SPA), par la relation :

$$\cos(SPA) = \cos(SZA) \cdot \cos(PZA) + \sin(SZA) \cdot \sin(PZA) \cdot \cos(|SAA-PAA|)$$

(e) Obtention d'une image HDR du ciel.

(f) Calcul de l'indice d'éclairement global horizontal ($\sigma_{GHI}$), de l'indice d'éclairement normal direct ($\sigma_{DNI}$) et de l'indice d'éclairement diffus horizontal ($\sigma_{DHI}$), où $\Omega_p$, $L_p$ et PZA sont l'angle solide sous-tendu par un pixel p, la luminance mesurée par ce pixel et l'angle entre ce pixel et le zénith, respectivement :

$$\sigma_{GHI} = \frac{\sum_{p\in\Lambda_1} L_p \Omega_p \cos(PZA)}{\sum_{p\in\Lambda_1} \Omega_p}$$

$$\sigma_{DNI} = \frac{\sum_{p\in\Lambda_2} L_p \Omega_p}{\sum_{p\in\Lambda_2} \Omega_p}$$

$$\sigma_{DHI} = \frac{\sum_{p\in\Lambda_3} L_p \Omega_p \cos(PZA)}{\sum_{p\in\Lambda_3} \Omega_p}$$

(g) Conversion entre $\sigma_{GHI}$, $\sigma_{DNI}$ et $\sigma_{DHI}$ et GHI, DNI et DHI.

Avantageusement, le procédé selon l'invention comprend en outre l'étape suivante :

(i) Calcul de la durée d'ensoleillement à partir du rayonnement solaire direct.

Le procédé selon l'invention comprend alors la fourniture d'un compteur temporel qui mesure le temps lorsque la durée d'ensoleillement est supérieure au seuil précisé ci-avant, et qui s'arrête lorsque la durée d'ensoleillement est inférieure à ce seuil. On connait alors la durée d'ensoleillement sur une période choisie, par exemple une journée, un mois, ou une année.

Avantageusement, le procédé selon l'invention comprend en outre l'étape suivante :

(j) Calcul du trouble atmosphérique à partir de la détermination des instants « ciel clair » et du DNI.

Le trouble atmosphérique est relatif aux atténuations du rayonnement solaire lors de sa traversée de l'atmosphère terrestre. Cette atténuation est principalement due aux phénomènes de diffusion par les aérosols et d'absorption par les différents composants atmosphériques (ozone, vapeur d'eau, oxygène...).

Le trouble atmosphérique donne une bonne indication de la qualité de la ressource solaire ou de l'atmosphère pour un site donné.

À partir des images acquises par la caméra 10, le système selon l'invention est capable de déterminer l'évolution du trouble atmosphérique sur le site étudié.

Pour cela, le système détecte, à l'aide d'un algorithme, les instants où le Soleil n'est pas occulté par un nuage. On parle alors de situation « ciel clair ».

Un algorithme de détection des instants « ciel clair » procède donc à l'acquisition d'une image ou de plusieurs images successives prises avec différents temps de pose, dans un laps de temps relativement court (par exemple, quelques millisecondes). Le système analyse ensuite la distribution de la luminance dans la zone circumsolaire et effectue si nécessaire une détection de contour du Soleil, de façon connue.

À partir de ces paramètres obtenus, le système détermine grâce à cet algorithme si l'instant correspond ou non à une situation dite « ciel clair ».

En option, un filtrage temporel, s'appuyant sur plusieurs images successives, peut être utilisé pour s'assurer de la bonne détection de cette situation.

Chaque fois qu'un instant « ciel clair » est déterminé par l'algorithme, une estimation du Trouble Atmosphérique (TA) est réalisée.

Par exemple, cette estimation est effectuée en utilisant la relation suivante :

$$TA = 11,1 \frac{\ln\left(b\frac{I_0}{I_{cc}}\right)}{m} + 1 \quad \text{avec} \quad b = 0,664 + 0,163 \cdot \exp\left(\frac{-h}{8000}\right)$$

où h est l'altitude du site considéré, $I_0$ est l'éclairement solaire extraterrestre (W.m$^{-2}$), $I_{cc}$ est le DNI par ciel clair (W.m$^{-2}$) et m est la masse d'air optique relative.

Avantageusement, le procédé selon l'invention comprend en outre l'étape suivante :

(h) Calcul du profil solaire à partir de l'analyse de la distribution radiale de la luminance.

Selon l'invention, pour obtenir le profil solaire, on mesure le DNI le long d'une ligne de pixels passant par le centre du Soleil sur l'image. En répétant cette mesure pour une pluralité d'angles, on obtient une distribution radiale de la luminance L. On évite ainsi avantageusement l'utilisation de l'instrument SAM (voir ci-avant) dont le coût est très élevé.

De plus, la mesure du profil solaire selon l'invention est plus précise qu'une mesure avec l'instrument SAM car le mesure selon l'invention prend en compte l'anisotropie de la luminance autour du Soleil (alors que l'instrument SAM suppose, à tort, une symétrie radiale du rayonnement solaire).

## Revendications

1. Système de mesure du rayonnement solaire comportant une caméra (10) munie d'un objectif (20) hémisphérique et comprenant un capteur (12) apte à capter la lumière pour générer une image, et un processeur (30) apte à :

   - Effectuer une calibration géométrique de la caméra (10) afin d'obtenir la correspondance entre le système de coordonnées des pixels (125) de l'image et le système de coordonnées de ladite caméra (10),
   - Calculer l'angle solide sous-tendu par chaque pixel (125, p) de ladite image, afin de pondérer la valeur de la luminance dans les calculs ultérieurs,
   - Effectuer une seconde calibration de la caméra (10) en comparant la position théorique du Soleil et sa position sur l'image, de façon à obtenir la correspondance entre le système de coordonnées de ladite caméra (10) et les points cardinaux,
   - Calculer l'angle entre chaque pixel (125) et le zénith (PZA), l'angle entre chaque pixel (125) et l'azimut (PAA), l'angle entre le Soleil et le zénith (SZA) et l'angle entre le Soleil et l'azimut (SAA), puis l'angle entre chaque pixel (125) et le Soleil (SPA), par la relation :

   $$\cos(SPA) = \cos(SZA) \cdot \cos(PZA) + \sin(SZA) \cdot \sin(PZA) \cdot \cos(|SAA-PAA|),$$

   - Obtenir une image à haute dynamique (HDR) du ciel, ladite image à haute dynamique est obtenue par l'acquisition de plusieurs images à basse dynamique prises avec différents temps de pose puis la combinaison de ces images en une image à haute dynamique, tout en conservant la linéarité du capteur de la caméra,

   **caractérisé en ce que** le processeur (30) est apte à :

   - Calculer l'indice d'éclairement global horizontal ($\sigma_{GHI}$), l'indice d'éclairement normal direct ($\sigma_{DNI}$) et l'indice d'éclairement diffus horizontal ($\sigma_{DHI}$), définis comme la somme des luminances mesurées par les pixels (125) de ladite image appartenant à une première région d'intérêt ($\Lambda_1$), à une deuxième région d'intérêt ($\Lambda_2$) et à une troisième région d'intérêt ($\Lambda_3$), respectivement, où $\Omega_p$, $L_p$ et PZA sont l'angle solide sous-tendu par un pixel p, la luminance mesurée par ce pixel et l'angle entre ce pixel et le zénith, respectivement, et où ladite première région d'intérêt ($\Lambda_1$) est l'ensemble des pixels (125) de l'image vérifiant PZA < 90°, ladite deuxième région d'intérêt ($\Lambda_2$) est l'ensemble des pixels (125) de l'image vérifiant SPA < β, β étant l'angle défini comme la limite entre la zone circumsolaire et le reste du ciel, et ladite troisième région d'intérêt ($\Lambda_3$) est l'ensemble des pixels (125) de l'image vérifiant {SPA > β} n {PZA < 90°} :

   $$\sigma_{GHI} = \frac{\sum_{p \in \Lambda_1} L_p \Omega_p \cos(PZA)}{\sum_{p \in \Lambda_1} \Omega_p}$$

$$\sigma_{DNI} = \frac{\sum_{p \in \Lambda_2} L_p \Omega_p}{\sum_{p \in \Lambda_2} \Omega_p}$$

$$\sigma_{DHI} = \frac{\sum_{p \in \Lambda_3} L_p \Omega_p \cos(PZA)}{\sum_{p \in \Lambda_3} \Omega_p}$$

- Convertir l'indice d'éclairement global horizontal ($\sigma_{GHI}$), l'indice d'éclairement normal direct ($\sigma_{DNI}$) et l'indice d'éclairement diffus horizontal ($\sigma_{OHI}$) en éclairement global horizontal (GHI), éclairement normal direct (DNI) et éclairement diffus horizontal (DHI), respectivement.

**2.** Système de mesure du rayonnement solaire selon la revendication 1, **caractérisé en ce qu'**il comporte un caisson de protection (40) étanche à l'eau et à la poussière dans lequel est logée ladite caméra (10) et qui comporte une fenêtre transparente (42) située devant l'objectif (20) de ladite caméra (10).

**3.** Système de mesure du rayonnement solaire selon la revendication 2, **caractérisé en ce que** ledit caisson (40) est équipé d'un régulateur de température (50) apte à réguler la température à l'intérieur dudit caisson (40).

**4.** Système de mesure du rayonnement solaire selon l'une quelconque des revendications 1 à 3, **caractérisé en ce qu'**il comprend au moins un filtre (60) qui est apte à atténuer ou moduler la lumière entrant par l'objectif (20) dans ladite caméra (10).

**5.** Procédé de mesure du rayonnement solaire **caractérisé en ce qu'**il utilise une caméra (10) munie d'un objectif (20) hémisphérique et comportant un capteur (12) apte à capter la lumière pour générer une image, et un processeur (30), la caméra étant orientée selon un axe Z qui pointe depuis le sol vers le zénith, et **en ce qu'**il comporte les étapes suivantes :

(a) On calibre géométriquement la caméra (10) afin d'obtenir la correspondance entre le système de coordonnées des pixels (125) de l'image fournie par ladite caméra (10) et le système de coordonnées de la caméra (10),
(b) On calcule l'angle solide sous-tendu par chaque pixel (125, p) de ladite image, afin de pondérer la valeur de la luminance dans les calculs ultérieurs,
(c) On calibre ladite camera (10) une seconde fois en comparant la position théorique du Soleil et sa position obtenue sur l'image, de façon à obtenir la correspondance entre le système de coordonnées de ladite caméra (10) et les points cardinaux,
(d) On calcule l'angle entre chaque pixel (125, p) et le zénith (PZA), l'angle entre chaque pixel (125, p) et l'azimut (PAA), l'angle entre le Soleil et le zénith (SZA) et l'angle entre le Soleil et l'azimut (SAA), puis l'angle entre chaque pixel (125, p) et le Soleil (SPA), grâce à la relation :

$$\cos(SPA) = \cos(SZA) \cdot \cos(PZA) + \sin(SZA) \cdot \sin(PZA) \cdot \cos(|SAA\text{-}PAA|)$$

(e) On obtient une image à haute dynamique (HDR) du ciel, ladite image à haute dynamique est obtenue par l'acquisition de plusieurs images à basse dynamique prises avec différents temps de pose puis la combinaison de ces images en une image à haute dynamique, tout en conservant la linéarité du capteur de la caméra,
(f) On calcule l'indice d'éclairement global horizontal ($\sigma_{GHI}$), l'indice d'éclairement normal direct ($\sigma_{DNI}$) et l'indice d'éclairement diffus horizontal ($\sigma_{DHI}$), définis comme la somme des luminances mesurées par les pixels (125) de ladite image appartenant à une première région d'intérêt ($\Lambda_1$), à une deuxième région d'intérêt ($\Lambda_2$) et à une troisième région d'intérêt ($\Lambda_3$), respectivement, où $\Omega_p$, $L_p$ et PZA sont l'angle solide sous-tendu par un pixel p, la luminance mesurée par ce pixel et l'angle entre ce pixel et le zénith, respectivement, et où ladite première région d'intérêt ($\Lambda_1$) est l'ensemble des pixels (125) de l'image vérifiant PZA < 90°, ladite deuxième région d'intérêt ($\Lambda_2$) est l'ensemble des pixels (125) de l'image vérifiant SPA < β, β étant l'angle défini comme la limite entre la zone circumsolaire et le reste du ciel, et ladite troisième région d'intérêt ($\Lambda_3$) est l'ensemble des pixels (125) de l'image vérifiant {SPA > β} n {PZA < 90°} :

$$\sigma_{GHI} = \frac{\sum_{p \in \Lambda_1} L_p \Omega_p \cos(PZA)}{\sum_{p \in \Lambda_1} \Omega_p}$$

$$\sigma_{DNI} = \frac{\sum_{p \in \Lambda_2} L_p \Omega_p}{\sum_{p \in \Lambda_2} \Omega_p}$$

$$\sigma_{DHI} = \frac{\sum_{p \in \Lambda_3} L_p \Omega_p \cos(PZA)}{\sum_{p \in \Lambda_3} \Omega_p}$$

(g) On effectue une conversion entre l'indice d'éclairement global horizontal ($\sigma_{GHI}$), l'indice d'éclairement normal direct ($\sigma_{DNI}$) et l'indice d'éclairement diffus horizontal ($\sigma_{DHI}$), et l'éclairement global horizontal (GHI), l'éclairement normal direct (DNI) et l'éclairement diffus horizontal (DHI), respectivement.

6. Procédé de mesure du rayonnement solaire selon la revendication précédente **caractérisé en ce qu'**il comprend en outre l'étape suivante :

(h) On calcule le profil solaire en mesurant l'éclairement normal direct (DNI) le long d'une ligne de pixels passant par le centre du Soleil sur l'image, puis on répète cette mesure pour une pluralité d'angles, de manière à obtenir une distribution radiale de la luminance autour du Soleil.

**Patentansprüche**

1. System zum Messen der Sonnenstrahlung, das eine Kamera (10) umfasst, die mit einem halbkugelförmigen Objektiv (20) ausgestattet ist und einen Sensor (12), der dazu ausgelegt ist, Licht einzufangen, um ein Bild zu erzeugen, und einen Prozessor (30) enthält, der für Folgendes ausgelegt ist:

- ausführen einer geometrischen Kalibrierung der Kamera (10), um die Übereinstimmung zwischen dem Koordinatensystem der Pixel (125) des Bilds und dem Koordinatensystem der Kamera (10) zu erhalten,
- berechnen des Raumwinkels, der von jedem Pixel (125, p) des Bilds eingeschlossen wird, um den Wert der Leuchtdichte in den nachfolgenden Berechnungen zu gewichten,
- ausführen einer zweiten Kalibrierung der Kamera (10), indem die theoretische Position der Sonne und ihre Position auf dem Bild verglichen werden, um die Übereinstimmung zwischen dem Koordinatensystem der Kamera (10) und den Himmelsrichtungen zu erhalten,
- berechnen des Winkels zwischen jedem Pixel (125) und dem Zenit (PZA), des Winkels zwischen jedem Pixel (125) und dem Azimut (PAA), des Winkels zwischen der Sonne und dem Zenit (SZA) und des Winkels zwischen der Sonne und dem Azimut (SAA) und anschließend des Winkels zwischen jedem Pixel (125) und der Sonne (SPA) durch folgende Relation:

$$\cos(SPA) = \cos(SZA) \cdot \cos(PZA) + \sin(SZA) \cdot \sin(PZA) \cdot \cos(|SAA-PAA|),$$

- erhalten eines Bilds mit hoher Dynamik (HDR) des Himmels, wobei das Bild mit hoher Dynamik durch das Erfassen mehrerer Bilder mit niedriger Dynamik, die mit unterschiedlichen Belichtungszeiten aufgenommen wurden, und anschließend der Kombination dieser Bilder zu einem Bild mit hoher Dynamik unter Beibehaltung der Linearität des Sensors der Kamera erhalten wird,

**dadurch gekennzeichnet, dass** der Prozessor (30) für Folgendes ausgelegt ist:

- berechnen des Index der globalen horizontalen Bestrahlungsstärke ($\sigma_{GHI}$), des Index der direkten normalen Bestrahlungsstärke ($\sigma_{DNI}$) und des Index der diffusen horizontalen Bestrahlungsstärke ($\sigma_{DHI}$), definiert als die Summe der Leuchtdichten, die von den Pixeln (125) des Bilds gemessen werden, die zu einem ersten Bereich von Interesse ($\Lambda_1$), zu einem zweiten Bereich von Interesse ($\Lambda_2$) bzw. zu einem dritten Bereich von Interesse ($\Lambda_3$) gehören, wobei $\Omega_p$, $L_p$ und PZA der Raumwinkel, der von einem Pixel p eingeschlossen wird, die von diesem Pixel gemessene Leuchtdichte bzw. der Winkel zwischen diesem Pixel und dem Zenit sind, und wobei der erste

Bereich von Interesse ($\Lambda_1$) die Gesamtheit der Pixel (125) des Bilds ist, die PZA < 90° verifizieren, der zweite Bereich von Interesse ($\Lambda_2$) die Gesamtheit der Pixel (125) des Bilds ist, die SPA < β verifizieren, wobei β der Winkel ist, der als Grenze zwischen der Zirkumsolarzone und dem Rest des Himmels definiert ist, und der dritte Bereich von Interesse ($\Lambda_3$) die Gesamtheit der Pixel (125) des Bilds ist, die {SPA > β} ∩ {PZA < 90°} verifizieren:

$$\sigma_{GHI} = \frac{\sum_{p \in \Lambda_1} L_p \Omega_p \cos(PZA)}{\sum_{p \in \Lambda_1} \Omega_p}$$

$$\sigma_{DNI} = \frac{\sum_{p \in \Lambda_2} L_p \Omega_p}{\sum_{p \in \Lambda_2} \Omega_p}$$

$$\sigma_{DHI} = \frac{\sum_{p \in \Lambda_3} L_p \Omega_p \cos(PZA)}{\sum_{p \in \Lambda_3} \Omega_p}$$

- konvertieren des Index der globalen horizontalen Bestrahlungsstärke ($\sigma_{GHI}$), des Index der direkten normalen Bestrahlungsstärke ($\sigma_{DNI}$) und des Index der diffusen horizontalen Bestrahlungsstärke ($\sigma_{DHI}$) in die globale horizontale Bestrahlungsstärke (GHI), die direkte normale Bestrahlungsstärke (DNI) bzw. die diffuse horizontale Bestrahlungsstärke (DHI).

2. System zum Messen der Sonnenstrahlung nach Anspruch 1, **dadurch gekennzeichnet, dass** es ein wasser- und staubdichtes Schutzgehäuse (40) umfasst, in dem die Kamera (10) untergebracht ist und das ein transparentes Fenster (42) umfasst, das sich vor dem Objektiv (20) der Kamera (10) befindet.

3. System zum Messen der Sonnenstrahlung nach Anspruch 2, **dadurch gekennzeichnet, dass** das Gehäuse (40) mit einem Temperaturregler (50) ausgestattet ist, der dazu ausgelegt ist, die Temperatur im Inneren des Gehäuses (40) zu regeln.

4. System zum Messen der Sonnenstrahlung nach einem der Ansprüche 1 bis 3, **dadurch gekennzeichnet, dass** es mindestens einen Filter (60) umfasst, der dazu ausgelegt ist, das durch das Objektiv (20) in die Kamera (10) eintretende Licht abzuschwächen oder zu modulieren.

5. Verfahren zum Messen der Sonnenstrahlung, **dadurch gekennzeichnet, dass** es eine Kamera (10), die mit einem halbkugelförmigen Objektiv (20) ausgestattet ist und einen Sensor (12), der dazu ausgelegt ist, Licht einzufangen, um ein Bild zu erzeugen, und einen Prozessor (30) enthält, wobei die Kamera entlang einer Achse Z ausgerichtet ist, die vom Boden aus in Richtung des Zenits zeigt, und dass es die folgenden Schritte umfasst:

(a) geometrisches Kalibrieren der Kamera (10), um die Übereinstimmung zwischen dem Koordinatensystem der Pixel (125) des Bilds, das von der Kamera (10) geliefert wird, und dem Koordinatensystem der Kamera (10) zu erhalten,
(b) berechnen des Raumwinkels, der von jedem Pixel (125, p) des Bilds eingeschlossen wird, um den Wert der Leuchtdichte in den nachfolgenden Berechnungen zu gewichten,
(c) kalibrieren der Kamera (10) zum zweiten Mal, indem die theoretische Position der Sonne und ihre Position auf dem Bild verglichen werden, um die Übereinstimmung zwischen dem Koordinatensystem der Kamera (10) und den Himmelsrichtungen zu erhalten,
(d) berechnen des Winkels zwischen jedem Pixel (125, p) und dem Zenit (PZA), des Winkels zwischen jedem Pixel (125, p) und dem Azimut (PAA), des Winkels zwischen der Sonne und dem Zenit (SZA) und des Winkels zwischen der Sonne und dem Azimut (SAA) und anschließend des Winkels zwischen jedem Pixel (125, p) und der Sonne (SPA) aufgrund folgender Relation:

$$\cos(SPA) = \cos(SZA) \cdot \cos(PZA) + \sin(SZA) \cdot \sin(PZA) \cdot \cos(|SAA-PAA|)$$

(e) erhalten eines Bilds mit hoher Dynamik (HDR) des Himmels, wobei das Bild mit hoher Dynamik durch das Erfassen mehrerer Bilder mit niedriger Dynamik, die mit unterschiedlichen Belichtungszeiten aufgenommen wurden, und anschließend der Kombination dieser Bilder zu einem Bild mit hoher Dynamik unter Beibehaltung der Linearität des Sensors der Kamera erhalten wird,

(f) berechnen des Index der globalen horizontalen Bestrahlungsstärke ($\sigma_{GHI}$), des Index der direkten normalen Bestrahlungsstärke ($\sigma_{DNI}$) und des Index der diffusen horizontalen Bestrahlungsstärke ($\sigma_{DHI}$), definiert als die Summe der Leuchtdichten, die von den Pixeln (125) des Bilds gemessen werden, die zu einem ersten Bereich von Interesse ($\Lambda_1$), zu einem zweiten Bereich von Interesse ($\Lambda_2$) bzw. zu einem dritten Bereich von Interesse ($\Lambda_3$) gehören, wobei $\Omega_p$, $L_p$ und PZA der Raumwinkel, der von einem Pixel p eingeschlossen wird, die von diesem Pixel gemessene Leuchtdichte bzw. der Winkel zwischen diesem Pixel und dem Zenit sind, und wobei der erste Bereich von Interesse ($\Lambda_1$) die Gesamtheit der Pixel (125) des Bilds ist, die PZA < 90° verifizieren, der zweite Bereich von Interesse ($\Lambda_2$) die Gesamtheit der Pixel (125) des Bilds ist, die SPA < $\beta$ verifizieren, wobei $\beta$ der Winkel ist, der als Grenze zwischen der Zirkumsolarzone und dem Rest des Himmels definiert ist, und der dritte Bereich von Interesse ($\Lambda_3$) die Gesamtheit der Pixel (125) des Bilds ist, die {SPA > $\beta$} n {PZA < 90°} verifizieren:

$$\sigma_{GHI} = \frac{\sum_{p\in\Lambda_1} L_p \Omega_p \cos(PZA)}{\sum_{p\in\Lambda_1} \Omega_p}$$

$$\sigma_{DNI} = \frac{\sum_{p\in\Lambda_2} L_p \Omega_p}{\sum_{p\in\Lambda_2} \Omega_p}$$

$$\sigma_{DHI} = \frac{\sum_{p\in\Lambda_3} L_p \Omega_p \cos(PZA)}{\sum_{p\in\Lambda_3} \Omega_p}$$

(g) ausführen einer Konvertierung des Index der globalen horizontalen Bestrahlungsstärke ($\sigma_{GHI}$), des Index der direkten normalen Bestrahlungsstärke ($\sigma_{DNI}$) und des Index der diffusen horizontalen Bestrahlungsstärke ($\sigma_{DHI}$) in die globale horizontale Bestrahlungsstärke (GHI), die direkte normale Bestrahlungsstärke (DNI) bzw. die diffuse horizontale Bestrahlungsstärke (DHI).

6. Verfahren zum Messen der Sonnenstrahlung nach dem vorhergehenden Anspruch, **dadurch gekennzeichnet, dass** es ferner den folgenden Schritt umfasst:

(h) berechnen des Sonnenprofils, indem die direkte normale Bestrahlungsstärke (DNI) entlang einer Pixellinie gemessen wird, die durch die Mitte der Sonne im Bild verläuft, und anschließend Wiederholen dieser Messung für eine Mehrzahl von Winkeln, um eine radiale Verteilung der Leuchtdichte um die Sonne herum zu erhalten.

## Claims

1. Solar radiation measuring system including a camera (10) provided with a hemispherical objective (20) and comprising a sensor (12) adapted to receive light to generate an image, and a processor (30) able to:

- perform a geometric calibration of the camera (10) in order to obtain the correspondence between the system of coordinates of pixels (125) of the image and the system of coordinates of said camera (10),
- calculate the solid angle subtended by each pixel (125, p) of said image, in order to weight the luminance value in the subsequent calculations,
- perform a second calibration of the camera (10) by comparing the theoretical position of the Sun and its position on the image, so as to obtain the correspondence between the system of coordinates of said camera (10) and the cardinal points,
- calculate the angle between each pixel (125) and the zenith (PZA), the angle between each pixel (125) and the azimuth (PAA), the angle between the Sun and the zenith (SZA) and the angle between the Sun and the azimuth (SAA), then the angle between each pixel (125) and the Sun (SPA), by the relation:

$$\cos(SPA) = \cos(SZA) \cdot \cos(PZA) + \sin(SZA) \cdot \sin(PZA) \cdot \cos(|SAA-PAA|),$$

- obtain a high dynamic range (HDR) image of the sky, said high dynamic range image is obtained by the acquisition of several low dynamic range images taken with different exposure times then the combination of these images into a high dynamic range image, while maintaining the linearity of the camera sensor,

**characterized in that** the processor (30) is able to:

- calculate the global horizontal irradiance index ($\sigma_{GHI}$), the direct normal irradiance index ($\sigma_{DNI}$) and the diffuse horizontal irradiance index ($\sigma_{DHI}$), defined as the sum of the luminances measured by the pixels (125) of said image belonging to a first region of interest ($\Lambda_1$), to a second region of interest ($\Lambda_2$) and to a third region of interest ($\Lambda_3$), respectively, where $\Omega_p$, $L_P$ and PZA are the solid angle subtended by a pixel p, the luminance measured by this pixel and the angle between this pixel and the zenith, respectively, and where said first region of interest ($\Lambda_1$) is the set of pixels (125) of the image verifying PZA < 90° said second region of interest ($\Lambda_2$) is the set of pixels (125) of the image verifying SPA < β, β being the angle defined as the limit between the circumsolar zone and the rest of the sky, and said third region of interest ($\Lambda_3$) is the set of pixels (125) of the image verifying {SPA > β} ∩ {PZA < 90°}:

$$\sigma_{GHI} = \frac{\sum_{p \in \Lambda_1} L_p \Omega_p \cos(PZA)}{\sum_{p \in \Lambda_1} \Omega_p}$$

$$\sigma_{DNI} = \frac{\sum_{p \in \Lambda_2} L_p \Omega_p}{\sum_{p \in \Lambda_2} \Omega_p}$$

$$\sigma_{DHI} = \frac{\sum_{p \in \Lambda_3} L_p \Omega_p \cos(PZA)}{\sum_{p \in \Lambda_3} \Omega_p}$$

- convert the global horizontal irradiance index ($\sigma_{GHI}$), the direct normal irradiance index ($\sigma_{DNI}$) and the diffuse horizontal irradiance index ($\sigma_{DHI}$) into global horizontal irradiance (GHI), direct normal irradiance (DNI) and diffuse horizontal irradiance (DHI), respectively.

2. Solar radiation measuring system according to claim 1, **characterized in that** it includes a waterproof and dustproof protective casing (40) in which said camera (10) is housed and which comprises a transparent window (42) located in front of the objective (20) of said camera (10).

3. Solar radiation measuring system according to claim 2, **characterized in that** said casing (40) is equipped with a temperature regulator (50) capable of regulating the temperature inside said casing (40).

4. Solar radiation measuring system according to any one of claims 1 to 3, **characterized in that** it comprises at least one filter (60) which is adapted to attenuate or modulate the light entering through the objective (20) into said camera (10).

5. Method for measuring solar radiation **characterized in that** it uses a camera (10) provided with a hemispherical objective (20) and comprising a sensor (12) adapted to receive light to generate an image, and a processor (30), the camera being oriented along a Z axis which points from the ground towards the zenith, and **in that** it includes the following steps:

(a) geometrically calibrating the camera (10) in order to obtain the correspondence between the system of coordinates of the pixels (125) of the image provided by said camera (10) and the system of coordinates of the camera (10),
(b) calculating the solid angle subtended by each pixel (125, p) of said image, in order to weight the luminance value in subsequent calculations,
(c) calibrating said camera (10) a second time by comparing the theoretical position of the Sun and its position obtained on the image, so as to obtain the correspondence between the system of coordinates of said camera (10) and the cardinal points,
(d) calculating the angle between each pixel (125, p) and the zenith (PZA), the angle between each pixel (125, p) and the azimuth (PAA), the angle between the Sun and the zenith (SZA) and the angle between the Sun and the azimuth (SAA), then the angle between each pixel (125, p) and the Sun (SPA), thanks to the relationship:

$$\cos(SPA) = \cos(SZA) \cdot \cos(PZA) + \sin(SZA) \cdot \sin(PZA) \cdot \cos(|SAA\text{-}PAA|)$$

(e) obtaining a high dynamic range (HDR) image of the sky, said high dynamic range image being obtained by acquiring several low dynamic range images taken with different exposure times then combining these images into a high dynamic range image, while maintaining the linearity of the camera sensor,

(f) calculating the global horizontal irradiance index ($\sigma_{GHI}$), the direct normal irradiance index ($\sigma_{DNI}$) and the diffuse horizontal irradiance index ($\sigma_{DHI}$), defined as the sum of the luminances measured by the pixels (125) of said image belonging to a first region of interest ($\Lambda_1$), to a second region of interest ($\Lambda_2$) and to a third region of interest ($\Lambda_3$), respectively, where $\Omega_p$, $L_p$ and PZA are the solid angle subtended by a pixel p, the luminance measured by this pixel and the angle between this pixel and the zenith, respectively, and where said first region of interest ($\Lambda_1$) is the set of pixels (125) of the image verifying PZA < 90° said second region of interest ($\Lambda_2$) is the set of pixels (125) of the image verifying SPA < β, β being the angle defined as the limit between the circumsolar zone and the rest of the sky, and said third region of interest ($\Lambda_3$) is the set of pixels (125) of the image verifying {SPA > β} ∩ {PZA < 90°}:

$$\sigma_{GHI} = \frac{\sum_{p \in \Lambda_1} L_p \Omega_p \cos(PZA)}{\sum_{p \in \Lambda_1} \Omega_p}$$

$$\sigma_{DNI} = \frac{\sum_{p \in \Lambda_2} L_p \Omega_p}{\sum_{p \in \Lambda_2} \Omega_p}$$

$$\sigma_{DHI} = \frac{\sum_{p \in \Lambda_3} L_p \Omega_p \cos(PZA)}{\sum_{p \in \Lambda_3} \Omega_p}$$

(g) performing a conversion between the global horizontal irradiance index ($\sigma_{GHI}$), the direct normal irradiance index ($\sigma_{DNI}$) and the diffuse horizontal irradiance index ($\sigma_{DHI}$), and the global horizontal irradiance (GHI), the direct normal irradiance (DNI) and the diffuse horizontal irradiance (DHI), respectively.

6. Method for measuring solar radiation according to the preceding claim, **characterized in that** it further comprises the following step:

(h) calculating the solar profile by measuring the direct normal irradiance (DNI) along a row of pixels passing through the center of the Sun in the image, then repeating this measurement for a plurality of angles, so as to obtain a radial distribution of the luminance around the Sun.

FIG. 1

FIG. 2

FIG. 3

## RÉFÉRENCES CITÉES DANS LA DESCRIPTION

**Littérature non-brevet citée dans la description**

- **RÉMI CHAUVIN**. *Evaluation de la ressource solaire pour la gestion optimisée de centrales CSP*, 2016